# FASCICULE DE BREVET EUROPEEN

(11) **EP 3 320 181 B1**
(45) Date de publication et mention de la délivrance du brevet: **22.05.2019**
(21) Numéro de dépôt: 16745791.0
(22) Date de dépôt: 06.07.2016
(51) Int. Cl.: F01D 5/06, F01D 11/00, F04D 29/32, F01D 5/30

(54) **ENSEMBLE ROTATIF DE TURBOMACHINE AÉRONAUTIQUE COMPRENANT UNE PLATEFORME RAPPORTÉE D'AUBE DE SOUFFLANTE**
ROTORANORDNUNG EINES LUFTFAHRT-TURBINENMOTORS UMFASSEND EINE ZWISCHENSCHAUFELPLATTFORM EINES GEBLÄSES
ROTOR ASSEMBLY OF AN AERONOTICAL TURBINE ENGINE COMPRISING AN INTER-BLADE PLATFORM OF A FAN

(30) Priorité: 08.07.2015 FR 1556459
(43) Date de publication de la demande: 16.05.2018
(73) Titulaire: Safran Aircraft Engines, 75015 Paris (FR)
(72) Inventeur: DE GAILLARD, Thomas, Alain, 77550 Moissy-Cramayel Cedex (FR); BOISSON, Alexandre, Bernard, Marie, 77550 Moissy-Cramayel Cedex (FR); GIMAT, Matthieu, Arnaud, 77550 Moissy-Cramayel Cedex (FR); LAGUERRE, Audrey, 77550 Moissy-Cramayel Cedex (FR)
(74) Mandataire: Cabinet Beau de Loménie
(86) Numéro de dépôt international: PCT/FR2016/051711
(87) Numéro de publication internationale: WO 2017/006054

(56) Documents cités:
- US-A1- 2015 125 305

## Description

### Arrière-plan de l'invention

La présente invention se rapporte au domaine général des turbomachines aéronautiques, et plus précisément au domaine des plateformes rapportées d'aubes de la soufflante d'une turbomachine aéronautique.

Dans une turbomachine, les plateformes rapportées d'aubes de la soufflante doivent assurer plusieurs fonctions. D'un point de vue aérodynamique, ces plateformes ont pour fonction première de définir la veine d'écoulement de l'air. En outre, elles doivent aussi être capables de résister à des efforts importants sans se déformer et en restant solidaires du disque qui les porte.

Afin de satisfaire ces différentes exigences, certaines configurations ont été proposées dans lesquelles les plateformes possèdent une première partie permettant de définir la veine d'écoulement de l'air et d'assurer la rétention de la plateforme lorsque le moteur est en rotation, et une deuxième partie permettant de limiter les déformations de la première partie sous les effets des efforts centrifuges et de maintenir la plateforme en position lorsque le moteur est à l'arrêt.

Le document US2015/0125305 A1 divulgue un ensemble rotatif concerne en particulier la fixation d'une plate-forme inter-aubes sur un disque de soufflante.

Dans les solutions existantes, la plateforme peut prendre la forme d'un caisson avec une paroi de veine bidimensionnelle retenue à l'aval par un tambour et à l'amont par une virole, la rétention amont par la virole étant réalisée au-dessus de la dent du disque de soufflante (une bride de la virole venant bloquer axialement et radialement la plateforme à l'amont).

Une telle rétention amont effectuée au-dessus de la dent du disque avec une virole présente l'inconvénient d'imposer un rapport de moyeu élevé, le rapport de moyeu étant le rapport du rayon pris entre l'axe de rotation et le point du bord d'attaque de l'aube affleurant en surface de la plateforme, sur le rayon pris entre l'axe de rotation et le point du bord d'attaque le plus externe.

Afin d'optimiser les performances de la soufflante, et plus généralement de la turbomachine, il est souhaitable de disposer d'un ensemble rotatif de turbomachine aéronautique comprenant une plateforme rapportée d'aube de soufflante montée sur un disque de soufflante qui présente un rapport de moyeu le plus faible possible.

### Objet et résumé de l'invention

La présente invention a donc pour but principal de pallier de tels inconvénients en proposant un ensemble rotatif de turbomachine aéronautique comprenant : un disque de soufflante de turbomachine aéronautique, l'assemblage comprenant un disque de soufflante ayant au moins une dent et au moins une plateforme montée sur la dent du disque de soufflante, la dent du disque de soufflante comprenant une patte s'étendant dans le prolongement axial de ladite dent à l'amont, caractérisé en ce que la plateforme comprend au niveau de son extrémité amont une bague de verrouillage dans laquelle est destinée à être logée la patte de la dent du disque de soufflante.

Cet assemblage, applicable à tout type de plateforme rapportée d'aube de soufflante de turbomachine aéronautique, permet de réduire le rapport de moyeu en assurant une rétention radiale de la plateforme par le biais de la bague de verrouillage à l'amont.

En outre, un assemblage selon l'invention est avantageux en ce qu'il ne nécessite pas de pièces rapportées supplémentaires pour assurer la rétention radiale de la plateforme à l'amont, puisqu'elle est assurée par la bague de verrouillage intégrée à la plateforme. Aussi, une dent du disque de soufflante présente généralement déjà une patte qui la prolonge à l'amont, ce qui réduit les opérations nécessaires pour concevoir un assemblage selon l'invention et évite de devoir redéfinir la forme des pièces environnantes.

L'assemblage est également avantageux en ce qu'il permet de laisser un degré de liberté tangentiel au niveau de la plateforme, en jouant sur la taille de la bague de verrouillage, par rapport à la section de la patte. Ce degré de liberté permet d'éviter les dommages causés notamment par l'ingestion d'objets dans la soufflante.

Avantageusement, la plateforme peut être réalisée en matériau composite à matrice organique réalisé à partir d'un renfort fibreux densifié par une matrice.

De préférence, l'assemblage comprend en outre une virole aval fixée sur le disque de soufflante et bloquant la plateforme à l'aval.

De préférence également, l'assemblage comprend en outre une virole amont fixée sur le disque de soufflante et bloquant axialement la plateforme à l'amont.

Dans un exemple de réalisation, la patte de la dent du disque et la bague de verrouillage ont des sections sensiblement identiques.

L'assemblage comprend en outre une cale positionnée à l'intérieur de la bague de verrouillage de manière à bloquer la plateforme sur la patte de la dent du disque de soufflante.

La dent du disque peut présenter une partie plane s'étendant sur une première longueur, la patte de la dent du disque s'étendant sur une deuxième longueur représentant entre 4% et 15% de ladite première longueur.

Dans des exemples de réalisation, la plateforme comprend un caisson ayant une paroi de veine, une paroi de fond et deux parois latérales s'étendant radialement entre la paroi de fond et la paroi de veine. Avec cette disposition, et lorsqu'une telle plateforme est réalisée en matériau composite à partir d'un renfort fibreux densifié par une matrice, la partie amont du caisson travaille en traction dans le sens des fibres grâce à la bague de verrouillage, ce qui assure une bonne tenue mécanique de l'ensemble.

L'invention vise aussi une soufflante de turbomachine aéronautique comprenant un ensemble rotatif tel que celui décrit précédemment, dans laquelle le disque de soufflante présente au moins deux dents délimitant entre elles une rainure, et au moins une aube munie d'un pied monté dans la rainure du disque de soufflante.

L'invention vise également un procédé de montage d'un ensemble rotatif tel que celui décrit précédemment, le procédé comprenant :
l'approche selon une direction radiale de la plateforme sur la dent du disque de soufflante en positionnant la bague de verrouillage en face de la patte de la dent du disque de soufflante, et
la translation axiale de l'amont vers l'aval de la plateforme en longeant la dent du disque de soufflante.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en coupe d'une turbomachine selon l'invention,
- la figure 2 est une vue schématique selon la direction II de la soufflante de la figure 1,
- la figure 3 est une vue schématique en perspective d'une plateforme destinée à être utilisée dans un ensemble rotatif selon l'invention,
- les figures 4 et 5 sont respectivement une vue schématique en coupe et une vue depuis l'amont d'un ensemble rotatif selon un mode de réalisation de l'invention, et
- la figure 6 est une vue depuis l'amont d'un ensemble rotatif selon un autre mode de réalisation de l'invention.

### Description détaillée de l'invention

Dans le présent exposé, les termes « longitudinal », « transversal », « inférieur », « supérieur » et leurs dérivés sont définis par rapport à la direction principale de la plateforme considérée ; les termes « transversal », « radial », « tangentiel », « intérieur », « extérieur » et leurs dérivés sont quant à eux définis par rapport à l'axe principal de la turbomachine ; enfin, les termes « amont » et « aval » sont définis par rapport au sens d'écoulement du fluide traversant la turbomachine. Aussi, sauf indication contraire, les mêmes signes de référence sur différentes figures désignent les mêmes caractéristiques.

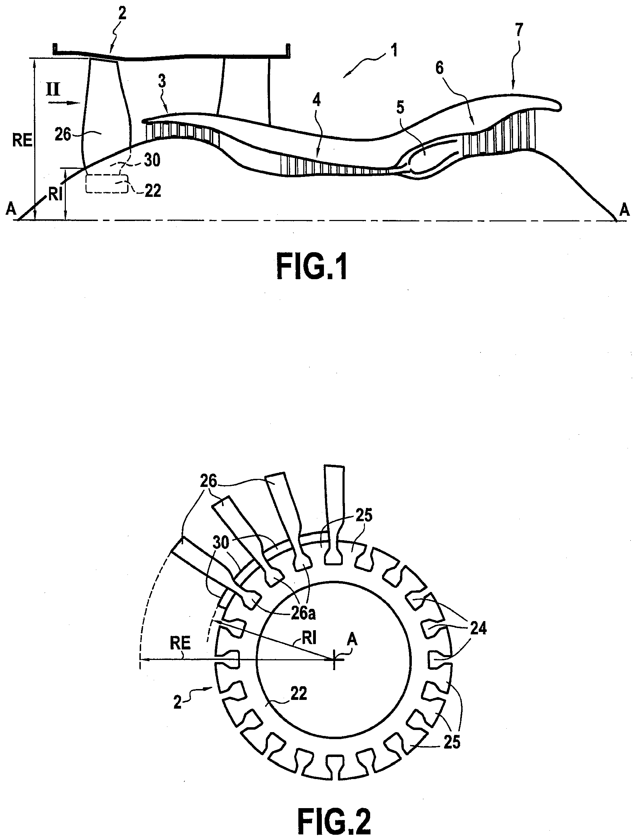

La **figure 1** montre une vue schématique en coupe longitudinale d'un turboréacteur à double flux 1 centré sur l'axe A-A selon l'invention. Il comporte, d'amont en aval : une soufflante 2, un compresseur basse pression 3, un compresseur haute pression 4, une chambre de combustion 5, une turbine haute pression 6, et une turbine basse pression 7.

La **figure 2** montre une vue schématique de la soufflante 2 de la figure 1 selon la direction II. La soufflante 2, objet de la présente invention, comprend un disque de soufflante 22 dans lequel une pluralité de rainures 24 sont pratiquées au niveau de sa périphérie extérieure. Ces rainures 24 sont rectilignes et s'étendent axialement d'amont en aval tout le long du disque 22. Elles sont en outre régulièrement réparties tout autour de l'axe A-A du disque 22. De cette manière, chaque rainure 24 définit avec sa voisine une dent 25 qui s'étend également axialement d'amont en aval tout le long du disque 22. De façon équivalente, une rainure 24 est délimitée entre deux dents 25 voisines.

La soufflante 2 comprend en outre une pluralité d'aubes 26 de profil curviligne (seules quatre aubes 26 ont été représentées sur la figure 2). Chaque aube 26 possède un pied 26a qui est monté dans une rainure 24 respective du disque de soufflante 22. A cette fin, le pied 26a d'une aube 26 peut posséder une forme en sapin ou en queue d'aronde adaptée à la géométrie des rainures 24.

Enfin, la soufflante 2 comprend une pluralité de plateformes 30 rapportées, chaque plateforme 30 étant montée dans l'intervalle entre deux aubes de soufflante 26 voisines, au voisinage des pieds 26a de celles-ci, afin de délimiter, du côté intérieur, une veine annulaire d'entrée d'air dans la soufflante 2, la veine étant délimitée du côté extérieur par un carter de soufflante.

Les figures 1 et 2 montrent également un rayon interne RI et un rayon externe RE. Le rayon interne RI correspond au rayon pris entre l'axe de rotation A-A et le point du bord d'attaque d'une aube 26 affleurant en surface d'une plateforme 30. Le rayon externe RE correspond quant à lui au rayon pris entre l'axe de rotation A-A et le point du bord d'attaque d'une aube 26 le plus externe. Ces deux rayons RI, RE sont ceux utilisés dans le calcul du rapport de moyeu RI/RE que l'ensemble rotatif selon l'invention se propose de diminuer (en réduisant notamment le rayon interne RI). En d'autres termes, la diminution du rapport de moyeu, en agissant notamment sur le rayon interne RI, revient à rapprocher la veine aérodynamique d'entrée d'air au plus près du disque de soufflante.

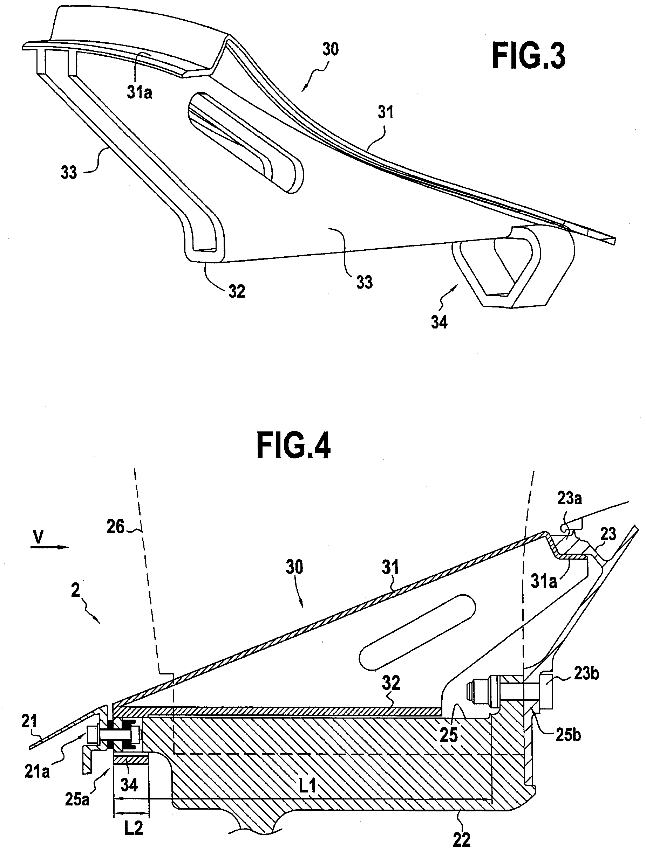

Une plateforme 30 destinée à être utilisée dans un ensemble rotatif selon un mode de réalisation de l'invention est représentée en perspective sur la **figure 3****.** La plateforme 30 prend ici la forme d'un caisson avec une paroi de veine 31, formant la face supérieure ou extérieure de la plateforme 30 et ayant un profil incliné, une paroi de fond 32 qui permet à la plateforme de reposer sur la dent 25 du disque 22 quand la turbomachine est à l'arrêt, et deux parois latérales 33 s'étendant radialement entre la paroi de fond 32 et la paroi de veine 31.

Une telle plateforme 30 peut être réalisée, de façon connue en soi, en matériau composite à matrice organique comprenant un renfort fibreux densifié par une matrice.

Conformément à l'invention, la plateforme 30 comprend au niveau de son extrémité amont une bague de verrouillage dans laquelle est destinée à être logée la patte 25a (figures 4, 5 et 6) d'une dent 25 du disque 22. Dans cet exemple de réalisation, la bague 34 présente une section en trapèze.

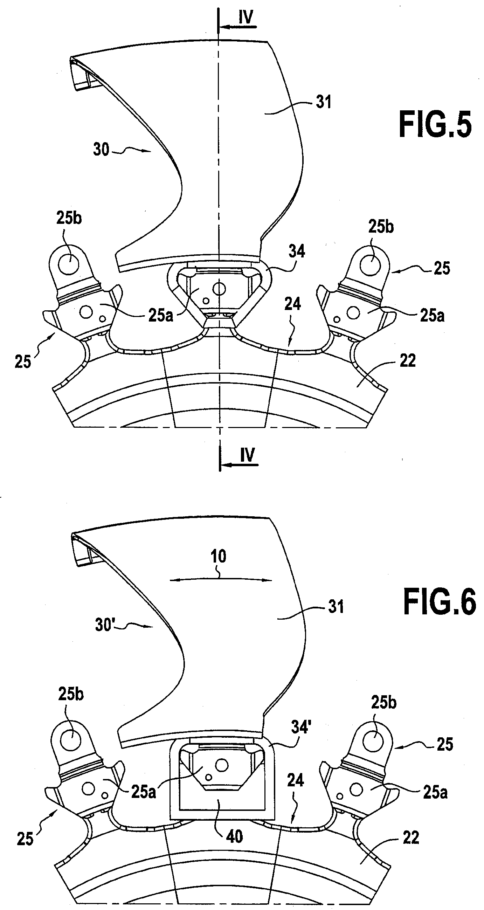

Un ensemble rotatif mettant en oeuvre la plateforme 30 présentée précédemment en référence à la figure 3 va maintenant être décrit en référence à la **figure 4****.** Cette figure illustre de façon plus détaillée une soufflante 2 selon un mode de réalisation de l'invention (vue en coupe au niveau d'une dent du disque de soufflante, selon le plan de coupe IV visible sur la figure 5).

Sur la figure 4 on peut voir notamment une soufflante 2 comprenant : une virole amont 21, le disque de soufflante 22 et un tambour aval 23 (aussi appelé tambour « booster » ou virole « booster ») muni d'une bride de retenue 23a destinée à coopérer avec une marche d'assemblage 31a de la plateforme 30 à l'aval. Le tambour aval 23 est fixé sur le disque de soufflante 22 au niveau d'un perçage 25b pratiqué dans une marche à l'aval de la dent 25, par le biais de fixations 23b. La virole 21 est fixée sur le disque de soufflante 22 au niveau de la patte 25a qui prolonge axialement la dent 25 du disque 22 à l'amont, par le biais de fixations 21a.

On notera que la dent 25 du disque 22 présente une partie plane (entre la marche à l'aval comprenant le perçage 25b, et l'extrémité amont de la patte 25a) qui s'étend sur une première longueur L1, et que la patte 25a de la dent du disque s'étend sur une deuxième longueur L2 pouvant représenter entre 4% et 15% de la première longueur L1. La bague de verrouillage 34 s'étend axialement sur une longueur de préférence inférieure à la longueur L2 de la patte 25a.

Le disque de soufflante 22 est accouplé avec l'arbre d'entrainement de la turbine basse pression 7 de la turbomachine, de sorte qu'en fonctionnement, la virole amont 21, le disque de soufflante 22, les aubes 26, et le tambour aval 23 sont entraînés solidairement en rotation par la turbine basse pression 7. Les plateformes 30, montées entre la virole amont 21 et le tambour aval 23, et bloquées axialement par ces deux éléments, sont ainsi également entraînées solidairement en rotation.

La plateforme 30 est retenue radialement à l'amont grâce à la bague de verrouillage 34 qui est « enfilée » sur la patte 25a. Entre d'autres termes, la patte 25a de la dent 25 est insérée dans la bague de verrouillage 34 de la plateforme 30.

De façon avantageuse, la patte 25a présente une section en trapèze destinée à coopérer avec la bague 34 qui présente également une section interne en trapèze, sensiblement identique à celle de la bague. De la sorte, la plateforme 30, une fois enfilée sur la patte 25a, est bloquée dans les directions radiale et tangentielle. Bien entendu, toute autre type de section est envisageable pour la patte 25a ou la bague 34, par exemple circulaire, rectangulaire, etc.

La **figure 5** montre une vue depuis l'amont (selon la direction V) de la figure 4) d'un ensemble rotatif selon l'invention comportant un disque 22 de soufflante sur lequel est montée une plateforme 30, telle que celle de la figure 4.

La **figure 6** illustre un autre exemple d'ensemble rotatif selon l'invention comportant également un disque 22 sur lequel est montée une plateforme 30'.

A la différence de l'ensemble rotatif présenté sur les figures 4 et 5, la bague de verrouillage 34' de la plateforme 30' de l'ensemble rotatif de la figure 6 présente une section rectangulaire plus grande que la section en trapèze de la patte 25a de la dent 25 du disque 22. Une cale 40 est alors positionnée entre la bague 34' et la patte 40 (lorsque la patte 40 est insérée dans la bague), afin de combler l'espace entre ces deux éléments et de bloquer radialement et tangentiellement la plateforme à l'amont. La cale 40 présente une section qui correspond sensiblement à la forme de l'espace laissé entre la bague 34' et la patte 25a, ici en forme de « U ».

L'utilisation de cette cale 40 est avantageuse, car elle permet de pouvoir monter la plateforme 30' avec un certain jeu tangentiel, puis de la verrouiller avec la cale. En effet, lors du montage de la soufflante, le profil complexe et encombrant des aubes et des plateformes laisse une marge de manoeuvre très faible pour monter les plateformes sur le disque. Ainsi, le montage de la soufflante est facilité avec la possibilité de faire pivoter tangentiellement (direction des flèches 10 sur la figure 6) les plateformes.

Enfin, pour monter une soufflante selon l'invention, on peut tout d'abord monter le tambour aval 23 sur le disque 22, puis on met en place une partie de l'élément de fixation 21a (par exemple un écrou) qui est destiné à assurer la fixation de la virole amont 21 sur le disque 22. On approche ensuite la plateforme 30, 30' de la dent du disque selon une direction radiale de façon à ce que la bague 34, 34' de verrouillage soit en regard de la patte 25a et alignée avec celle-ci. Puis on fait translater la plateforme 30, 30' axialement de l'amont vers l'aval en lui faisant longer la dent du disque, jusqu'à ce qu'elle soit bloquée à l'aval par le tambour aval 23. Enfin, la virole amont 21 est montée sur le disque 22 et fixée par les éléments de fixation 21a.

On notera que, dans le cas où une cale 40 est utilisée, on pourra faire pivoter tangentiellement la plateforme 30' au moment où elle est enfilée sur la patte 25a de la dent du disque, puis la bloquer avec la cale 40 avant de venir monter la virole amont 21.

On notera également que l'invention ne s'applique pas seulement aux plateformes à caisson comme dans les exemples décrits précédemment, mais peut s'appliquer à tout type de plateforme rapportée d'aube de soufflante.

## Revendications

1. Ensemble rotatif de turbomachine aéronautique comprenant :
un disque (22) de soufflante (2) ayant au moins une dent (25), et au moins une plateforme (30') montée sur la dent du disque de soufflante, la dent du disque de soufflante comprenant
une patte (25a) s'étendant dans le prolongement axial de ladite dent à l'amont, **caractérisé en ce que** la plateforme comprend au niveau de son extrémité amont une bague de verrouillage (34') dans laquelle est destinée à être logée la patte de la dent du disque de soufflante, et **en ce qu'**il comprend en outre une cale (40) positionnée à l'intérieur de la bague de verrouillage (34') de manière à bloquer la plateforme (30') sur la patte (25a) de la dent du disque de soufflante.

2. Ensemble selon la revendication 1, **caractérisé en ce qu'**il comprend en outre une virole aval (23) fixée sur le disque de soufflante et bloquant la plateforme à l'aval.

3. Ensemble selon l'une quelconque des revendications 1 et 2, **caractérisé en ce qu'**il comprend en outre une virole amont (21) fixée sur le disque de soufflante et bloquant axialement la plateforme à l'amont.

4. Ensemble selon l'une quelconque des revendications 1 à 3, **caractérisé en ce que** la patte (25a) de la dent du disque et la bague de verrouillage (34) ont des sections sensiblement identiques.

5. Ensemble selon l'une quelconque des revendications 1 à 4, **caractérisé en ce que** la dent (25) du disque (22) présente une partie plane s'étendant sur une première longueur (L₁), la patte de la dent du disque s'étendant sur une deuxième longueur (L₂) représentant entre 4% et 15% de ladite première longueur.

6. Ensemble selon l'une quelconque des revendications 1 à 5, **caractérisé en ce que** la plateforme (30, 30') comprend un caisson ayant une paroi de veine (31), une paroi de fond (32) et deux parois latérales (33) s'étendant radialement entre la paroi de fond et la paroi de veine.

7. Soufflante (2) de turbomachine aéronautique (1) comprenant un ensemble selon l'une quelconque des revendications 1 à 6, dans laquelle le disque de soufflante (22) présente au moins deux dents (25) délimitant entre elles une rainure (24), et au moins une aube (26) munie d'un pied (26a) monté dans la rainure du disque de soufflante.

8. Procédé de montage d'un ensemble rotatif selon l'une quelconque des revendications 1 à 6, le procédé comprenant :
l'approche selon une direction radiale de la plateforme (30, 30') sur la dent (25) du disque (22) de soufflante en positionnant la bague de verrouillage (34, 34') en face de la patte (25a) de la dent du disque de soufflante, et
la translation axiale de l'amont vers l'aval de la plateforme en longeant la dent du disque de soufflante.

## Patentansprüche

1. Rotationsanordnung einer Luftfahrtturbomaschine, umfassend:
eine Scheibe (22) eines Gebläses (2) mit wenigstens einem Zahn (25), und wenigstens eine an dem Zahn der Gebläsescheibe angebrachte Plattform (30'),
wobei der Zahn der Gebläsescheibe eine Lasche (25a) aufweist, die sich in der axialen Verlängerung des Zahns stromaufwärts erstreckt,
**dadurch gekennzeichnet, dass** die Plattform im Bereich ihres stromaufwärtigen Endes einen Verriegelungsring (34') umfasst, in dem die Lasche des Zahns der Gebläsescheibe aufgenommen werden soll, und dass sie ferner einen Keil (40) umfasst, der innerhalb des Verriegelungsrings (34') positioniert ist, um die Plattform (30') an der Lasche (25a) des Zahns der Gebläsescheibe festzulegen.

2. Anordnung nach Anspruch 1, **dadurch gekennzeichnet, dass** sie ferner einen stromabwärtigen Ring (23) umfasst, der an der Gebläsescheibe befestigt ist und die Plattform stromabwärts festlegt.

3. Anordnung nach einem der Ansprüche 1 und 2, **dadurch gekennzeichnet, dass** sie ferner einen stromaufwärtigen Ring (21) umfasst, der an der Gebläsescheibe befestigt ist und die Plattform stromaufwärts axial festlegt.

4. Anordnung nach einem der Ansprüche 1 bis 3, **dadurch gekennzeichnet, dass** die Lasche (25a) des Zahns der Scheibe und der Verriegelungsring (34) im Wesentlichen identische Querschnitte aufweisen.

5. Anordnung nach einem der Ansprüche 1 bis 4, **dadurch gekennzeichnet, dass** der Zahn (25) der Scheibe (22) einen ebenen Teil aufweist, der sich über eine erste Länge (L₁) erstreckt, wobei sich die Lasche des Zahns der Scheibe über eine zweite Länge (L₂), welche zwischen 4 % und 15 % der ersten Länge ausmacht, erstreckt.

6. Anordnung nach einem der Ansprüche 1 bis 5, **dadurch gekennzeichnet, dass** die Plattform (30, 30') einen Kasten mit einer Kanalwand (31), einer Bodenwand (32) und zwei Seitenwänden (33), die sich zwischen der Bodenwand und der Kanalwand radial erstrecken, umfasst.

7. Gebläse (2) einer Luftfahrtturbomaschine (1), umfassend eine Anordnung nach einem der Ansprüche 1 bis 6, wobei die Gebläsescheibe (22) wenigstens zwei Zähne (25) aufweist, die zwischen sich eine Nut (24) begrenzen, und wenigstens eine Schaufel (26), die mit einem in der Nut der Gebläsescheibe angebrachten Fuß (26a) ausgestattet ist.

8. Verfahren zur Montage einer Rotationsanordnung nach einem der Ansprüche 1 bis 6, wobei das Verfahren umfasst:
die Annäherung der Plattform (30, 30') in einer radialer Richtung an den Zahn (25) der Gebläsescheibe (22), unter Positionieren des Verriegelungsrings (34, 34') gegenüber der Lasche (25a) des Zahns der Gebläsescheibe, und
die axiale Verschiebung der Plattform von stromaufwärts nach stromabwärts entlang des Zahns der Gebläsescheibe.

## Claims

1. A rotary assembly of an aviation turbine engine, the assembly comprising: a fan disk (22) having at least one tooth (25) and at least one platform (30') mounted on the tooth of the fan disk, the tooth of the fan disk including a tab (25a) extending said tooth axially upstream, **characterized in that** the platform includes a locking ring (34') at its upstream end for receiving the tab of the tooth of the fan disk, and **in that** it further includes a spacer (40) positioned inside the locking ring (34') so as to block the platform (30') on the tab (25a) of the tooth of the fan disk.

2. An assembly according to claim 1, **characterized in that** it further comprises a downstream shroud (23) fastened to the fan disk and blocking the platform downstream.

3. An assembly according to claim 1 or claim 2, **characterized in that** it further includes an upstream shroud (21) fastened on the fan disk and blocking the platform axially upstream.

4. An assembly according to any one of claims 1 to 3, **characterized in that** the tab (25a) of the tooth of the disk and the locking ring (34) have sections that are substantially identical.

5. An assembly according to any one of claims 1 to 4, **characterized in that** the tooth (25) of the disk (22) presents a plane portion extending over a first length (L1), the tab of the tooth of the disk extending over a second length (L2) lying in the range 4% to 15% of said first length.

6. An assembly according to any one of claims 1 to 5, **characterized in that** the platform (30, 30') has a box section beam with a passage wall (31), a bottom wall (32), and two side walls (33) extending between the bottom wall and the passage wall.

7. A fan (2) for an aviation turbine engine (1) comprising an assembly according to any one of claims 1 to 6, wherein the fan disk (22) presents at least two teeth (25) defining between them a slot (24), and at least one blade (26) provided with a root (26a) mounted in the slot of the fan disk.

8. A method of assembling a rotary assembly according to any one of claims 1 to 6, the method comprising:
moving the platform (30, 30') radially up to the tooth (25) of the fan disk (22) while positioning the locking ring (34, 34') to face the tab (25a) of the tooth of the fan disk; and
moving the platform in translation axially from upstream to downstream along the tooth of the fan disk.
